# EUROPÄISCHE PATENTSCHRIFT

(11) **EP 2 664 445 B1**
(45) Veröffentlichungstag und Bekanntmachung des Hinweises auf die Patenterteilung: **05.09.2018**
(21) Anmeldenummer: 12167900.5
(22) Anmeldetag: 14.05.2012
(51) Int. Cl.: B29C 70/02, B29C 70/08, B29C 70/46, B29C 70/56, B29C 70/68

(54) **Mehrschichtverbundstruktur aus faserverstärktem Kunststoff und Verfahren zur Herstellung der Mehrschichtverbundstruktur**
Composite structure made of fibre-reinforced plastic and method for its manufacture
Structure composite en plastique renforcé de fibres et procédé de fabrication de la structure composite

(43) Veröffentlichungstag der Anmeldung: 20.11.2013
(73) Patentinhaber: EDAG Werkzeug + Karosserie GmbH, 36039 Fulda (DE); Bayerische Motoren Werke Aktiengesellschaft, 80809 München (DE)
(72) Erfinder: Münch, Sina, 82205 Gilching (DE); Grasmeier, Johannes, 84130 Dingolfing (DE); Engelhardt, Philipp, 84028 Landshut (DE)
(74) Vertreter: Schwabe - Sandmair - Marx

(56) Entgegenhaltungen:
- EP-A1- 1 145 841
- WO-A1-96/30203
- CA-A1- 2 593 519
- DE-A1- 10 351 178
- DE-A1-102010 037 888
- GB-A- 1 341 438
- JP-A- 11 277 687

## Beschreibung

Die Erfindung betrifft eine Mehrschichtverbundstruktur für ein Fahrzeug, die durch Umformung um nicht parallele Achsen dreidimensional aus faserverstärktem Kunststoff geformt ist. Die Mehrschichtverbundstruktur kann Bestandteil des fertigen Fahrzeugs sein oder als solche vorliegen. Als Bestandteil des fertigen Fahrzeugs, d. h. im eingebauten Zustand, bildet die Mehrschichtverbundstrukturstruktur einen für den Betrachter sichtbaren Flächenbereich der Außenhaut. Ferner betrifft die Erfindung ein Verfahren zur Herstellung der Mehrschichtverbundstruktur. Faserverstärkte Kunststoffe finden im Fahrzeugbau im Allgemeinen, vor allem im Flugzeugbau, seit langem Verwendung, um Gewicht einzusparen. Im Automobilbau, sowohl bei Personenkraftwagen als auch Nutzfahrzeugen, halten derartige Leichtbauwerkstoffe ebenfalls Einzug. So wird beispielsweise an der Verwendbarkeit von faserverstärkten thermoplastischen Werkstoffen, so genanntem Organoblech, für das Bodensegment von Fahrzeugen geforscht. Ein Vorteil von Organoblechen ist, dass sie den Metallblechen vergleichbar mittels Umformpressen in kurzer Zykluszeit dreidimensional umgeformt werden können.
Bei Sichtstrukturen von Fahrzeugen, insbesondere Automobilen, spielt neben Stabilität, Festigkeit und Gewicht auch der äußere optische Eindruck eine wichtige Rolle, insbesondere die Oberflächenanmutung. In Bezug auf die optische Anmutung haben die zur Verstärkung erforderlichen Fasern einen deutlichen Einfluss, da sie bedingt durch den Herstellungs- und Umformprozess zu Unregelmäßigkeiten an der Oberfläche des umgeformten Bauteils führen. Soll eine Struktur aus faserverstärktem Kunststoff eine Sichtstruktur eines Fahrzeugs bilden, spricht man von einer Faser-Sichtoptik, wenn die Fasern von außen deutlich zu erkennen sind, beispielsweise direkt durch eine transparente Kunststoffmatrix oder als Abzeichnung einer Gewebestruktur durch eine eingefärbte oder klare Kunststoffmatrix bzw. eine deckende Lackschicht und Fehler wie etwa Einschlüsse, Poren, Faserrisse, Rovingverschiebungen und dergleichen sich innerhalb der für Bauteile im Sichtbereich geltenden Standards der Automobilhersteller halten. Abzeichnungen von Ondulationen, Webstrukturen oder Fasersträngen gelten hingegen als technische Merkmale und nicht als Fehlerbilder. Derartige Oberflächen können als Class-A-Oberflächen qualifiziert werden.

Um zu verhindern, dass sich bei der Umformung eine unregelmäßige Oberfläche aufgrund einer zufallsbedingten Bedeckung der Oberfläche mit Fasern bildet, lehrt die FR 2 827 542 B1 ein Verfahren der Thermoformung, bei dem ein faserverstärktes thermoplastisches Halbzeug mit einer porösen Materialschicht bedeckt und umgeformt wird. Bei dem umzuformenden Halbzeug handelt es sich um ein plattenförmiges Material aus Polypropylen mit Kurzfaserverstärkung. Durch die poröse Materialschicht soll verhindert werden, dass Fasern des Halbzeugs die Oberfläche durchstoßen. Die Porengröße ist so gewählt, dass die poröse Materialschicht für die Fasern eine Art Barriere bildet, während der thermoplastische Kunststoff in die Poren eindringen und die poröse Materialschicht zumindest teilweise umkleiden kann. Die poröse Materialschicht ist eine Web- oder Maschenware oder ein Vlies aus Polyamid. Als Beispiel einer Sichtstruktur wird die Heckwand eines Automobils genannt. Fraglich erscheint jedoch, ob die poröse Materialschicht tatsächlich die im faserverstärkten thermoplastischen Halbzeug zufällig, nicht zusammenhängend verteilten Fasern zurückhält und dennoch den thermoplastischen Kunststoff gleichmäßig eindringen lässt.

Die EP 1 145 841 A1 betrifft eine Mehrschichtverbindungsstruktur, die ausschließlich aus Faserschichten besteht, die in einer Harzmatrix eingebunden sein können. Die Faserschichten können Fasern aufweisen, die in unterschiedliche Richtungen weisen, wodurch eine besonders hohe Festigkeit und Flexibilität der Verbindungsstruktur erreicht wird, insbesondere dadurch, dass die Faserschichten mittels des Harzes nur zufällig und nur in Teilbereichen miteinander verbunden sind. Die GB 1 341 438 A betrifft eine Mehrschichtverbindungsstruktur, die eine erste Schicht aus einer feinen Fasermatte mit einem Harzüberzug und darauf folgend mehrere Lagen mit Glasfasermatten aufweist, die jeweils in einer Harzmatrix eingebettet sind. Durch Zusammenpressen der Schichten wird ein zweischichtiges Produkt erhalten, das an seiner Oberseite eine erste Schicht aufweist, die mit Harz überzogen und die in die Harzmatrix der ersten Glasfasermatte integrierte Fasermatte aufweist und eine zweite Schicht, die aus den miteinander verschmolzenen Harzmatrizen und den Glasfasermatten besteht. Die feine Fasermatte bildet dabei eine Barriere, die verhindern soll, dass sich die Glasfasern bis zur Oberfläche der Verbindungsstruktur oder darüber hinaus erstrecken und dadurch eine raue Oberfläche der Struktur ausbilden. Die JP 11 277687 A betrifft ein Verfahren zur Herstellung einer Thermoplastplatte, bei der die Fasern einer Faserverstärkungsmatte von außerhalb der Platte sichtbar sind. Die Faserverstärkungsmatte wird zwischen zwei transparenten Thermoplastplatten mittels eines transparenten Agrylharzes verklebt, sodass die Struktur der Verstärkungsmatte durch die transparente Thermoplastplatte von beiden Seiten in gleicher Weise sichtbar ist. Um den optischen Eindruck des Verbundes zu optimieren, wird eine Dicke der Agrylharzschicht so gewählt, dass von außen ein einheitliches Bild der Fasern sichtbar ist und insbesondere keine Stellen zu erkennen sind, die kein Agrylharz aufweisen, da diese Bereiche optisch leicht als optisch störender farblich abweichender Bereich zu erkennen sind. Die WO 96/30203 A1 betrifft ein optisch transparentes Verbundmaterial, bei dem eine Lage aus transparentem Polymer durch Bänder aus Glasfasern verstärkt wird. Ergebnis ist ein durchsichtiges Verbundmaterial mit überlegenen Festigkeitseigenschaften. Die DE 10 2010 037888 A1 (D7) betrifft ein Sichtbauteil für ein Kfz, das einen Grundkörper aus Kohlenfaserstoff mit einer Ausnehmung, einen Hinterlegkörper, der mit dem Grundkörper verbunden wird und wenigstens die Ausnehmung überdeckt, und einen Oberflächenschutz, der auf der von dem Hinterlegkörper abgewandten Seite mit dem Grundkörper verbunden wird und dabei auch die Ausnehmung füllt, umfasst. Der Hinterlegkörper besteht aus einer Glasfaserschicht, die beidseitig von einer Kunststoffschicht umgeben und in diese eingebettet ist. Er ist durchsichtig oder lichtdurchlässig. Der Oberflächenschutz besteht ebenfalls aus einem durchsichtigen Kunststoff. Bei dem Sichtbauteil handelt es sich um eine Schwellenabdeckung, ein Zierelement eines Armaturenbretts oder ein sonstiges Zierbauteil. Es ist eine Aufgabe der Erfindung, eine Mehrschichtverbundstruktur für ein Fahrzeug, insbesondere ein Automobil, aus faserverstärktem thermoplastischen Kunststoff zu schaffen, die bereits werkzeugfallend die an sichtbare Strukturen von Fahrzeugen gestellten Anforderungen bezüglich der optischen Anmutung erfüllt, aber dennoch preiswert ist.

Die Erfindung geht von einer Mehrschichtverbundstruktur nach Anspruch 1 aus, die durch Umformung um nicht parallele Achsen dreidimensional geformt ist. Nach der Erfindung weist die umgeformte Mehrschichtverbundstruktur bzw. Sichtstruktur wenigstens drei Thermoplastschichten und wenigstens zwei Faserschichten auf, die in oder zwischen den Thermoplastschichten eingebettet sind. Die wenigstens drei Thermoplastschichten werden im Folgenden als erste, zweite und dritte Thermoplastschicht und die wenigstens zwei Faserschichten als erste und zweite Faserschicht bezeichnet. Die erste Faserschicht ist zwischen der ersten und der zweiten Thermoplastschicht oder in eine dieser Thermoplastschichten eingebettet, und die zweite Faserschicht ist zwischen der zweiten und der dritten Thermoplastschicht oder in eine dieser Thermoplastschichten eingebettet. Die erste, die zweite und die dritte Thermoplastschicht folgen in der Thermoplastmatrix der Mehrschichtverbundstruktur vorzugsweise unmittelbar aufeinander.

Der Begriff "Schicht" wird nicht nur so verstanden, dass die Thermoplastschichten mit dem bloßen Auge oder unter dem Mikroskop oder geeigneten Messmethoden optisch oder stofflich oder nach anderen Eigenschaften voneinander abgrenzbar sind. So können die wenigstens drei Thermoplastschichten aus dem gleichen thermoplastischen Kunststoff bestehen. Die Thermoplastschichten können insbesondere gemeinsam und vorzugsweise mit weiteren Thermoplastschichten eine homogene Kunststoffmatrix bilden. Die erste und die zweite Faserschicht können räumlich voneinander getrennt sein, in solchen Ausführungen nämlich zumindest durch die zweite Thermoplastschicht. Durch die voneinander getrennten Faserschichten wird auch in einer homogenen einstoffigen Kunststoffmatrix eine Schichtung des thermoplastischen Kunststoffs erhalten, so dass eine Schichtabfolge - erste Thermoplastschicht, erste Faserschicht, zweite Thermoplastschicht, zweite Faserschicht, dritte Thermoplastschicht - vorliegt. Die erste und die zweite Faserschicht können jedoch auch unmittelbar aufeinander liegen, so dass sich die Fasern der beiden Faserschichten über die gesamte Fläche gleichmäßig oder über einen überwiegenden Teil der einander überlappenden Flächen der Faserschichten berühren. Eine Berührung kann auch beispielsweise nur in einem kleineren Flächenteil des Überlappungsbereichs stattfinden. Eine in Dickenrichtung der Mehrschichtverbundstruktur dichte Abfolge von Faserschichten erhöht die mechanische Stabilität der Mehrschichtverbundstruktur. In einander berührenden Flächenbereichen der Faserschichten sind die Faserschichten in den Thermoplastschichten eingebettet. Die Schichtung kann daher beispielsweise auch so sein, dass auf die erste Thermoplastschicht unmittelbar die zweite Thermoplastschicht folgt und die erste Faserschicht in der ersten Thermoplastschicht und die zweite Faserschicht in der zweiten Thermoplastschicht eingebettet ist. Auch in derartigen Ausführungen kann von einer Schichtabfolge gesprochen werden, nämlich der Abfolge: erste Thermoplastschicht mit erster Faserschicht, zweite Thermoplastschicht mit zweiter Faserschicht, dritte Thermoplastschicht mit optional einer eingebetteten dritten Faserschicht. Die genannten Thermoplast- und Faserschichten folgen unmittelbar aufeinander. Soweit keine näheren Angaben gemacht werden, werden die

Thermoplastschichten der Mehrschichtstruktur im erfindungsgemäßen Sinne nur durch die eingebetteten Faserschichten voneinander unterschieden.

Die erste und die zweite Faserschicht und vorzugsweise auch noch wenigstens eine weitere oder mehrere weitere Faserschichten der Mehrschichtverbundstruktur sind jeweils Flächengebilde aus Endlosfasern oder als Vlies gebildet. Die Endlosfasern sind in den Faserschichten vorzugsweise regelmäßig angeordnet. Eine oder mehrere der Faserschichten oder auch alle Faserschichten kann oder können jeweils ein Gewebe, eine Maschenware wie etwa ein Gewirke, oder ein Gelege aus Endlosfasern sein. Wenn es heißt, dass eine Faserschicht aus Endlosfasern gebildet ist, so bedeutet dies, dass die betreffende Faserschicht zumindest zu einem weit überwiegenden Teil, d. h. zumindest im Wesentlichen, aus Endlosfasern besteht. Sollten in der betreffenden Faserschicht Kurzfasern enthalten sein, dann nur in solch einem geringen Anteil, dass die Kurzfasern das optische Erscheinungsbild und insbesondere auch die äußere Oberfläche der Sichtstruktur nicht stören. Bevorzugt besteht die betreffende Faserschicht ausschließlich aus Endlosfasern. Eine oder mehrere der Faserschichten oder auch alle Faserschichten kann oder können jeweils aber auch ein Vlies sein. Die Faserschichten können Flächengebilde jeweils des gleichen Typs, entweder jeweils beispielsweise ein Gewebe oder stattdessen beispielsweise ein Gelege oder Vlies sein. Alternativ können die Faserschichten auch von unterschiedlichem Typ sein. So kann beispielsweise die erste Faserschicht ein Gewebe und die zweite Faserschicht oder eine der optional weiteren Faserschichten ein Gelege oder Maschenware oder ein Vlies sein. Mit anderen Worten bedeutet dies, dass eine der wenigstens zwei Faserschichten ein Flächengebilde eines ersten der genannten Typen und die andere der wenigstens zwei Faserschichten oder eine optional weitere Faserschicht ein Flächengebilde entweder des gleichen oder aber eines anderen der genannten Typen sein kann. In Bezug auf die Thermoplastschichten gilt Vergleichbares, d. h. die wenigstens drei Thermoplastschichten können werkstoffgleich oder dem Werkstoff nach unterschiedlich sein, solange nur eine ausreichend feste Kunststoffmatrix im Ganzen erhalten wird. Zweckmäßigerweise sind die Thermoplastschichten jedoch werkstoffgleich.

Mit Geweben, Gelegen und auch mit Maschenware können Sichtstrukturen mit optisch erkennbarem Muster, d. h. mit einem bestimmten Faserdesign erzeugt werden. Mit Vliesen, also einer oder mehreren Faserschichten aus zusammenhängenden Wirrfasern, lassen sich wiederum ganz andere optische Eindrücke erzielen.

Von den wenigstens drei Thermoplastschichten ist wenigstens die erste, vorzugsweise auch wenigstens noch die zweite Thermoplastschicht aus amorphem Kunststoff gebildet. Umfasst die Mehrschichtverbundstruktur eine oder mehrere weitere Thermoplastschichten, ist oder sind vorzugsweise auch diese optional weiteren Thermoplastschichten aus amorphem Kunststoff gebildet. Polycarbonate (PC), Styrol-Acrylnitril (SAN), Polymethylmethacrylat (PMMA) und thermoplastische Polyurethane (TPU) sind bevorzugte Polymere. Das Polymer der jeweiligen Thermoplastschicht kann ein Homopolymer, ein Copolymer oder auch eine Polymerlegierung bzw. ein Polymerblend sein. Bevorzugt besteht die jeweilige Thermoplastschicht aus einem Homopolymer, Copolymer oder einer Polymerlegierung aus der genannten Gruppe von Polymeren. Amorphe Polymere haben gegenüber teilkristallinen Polymeren zum einen den Vorteil, dass sie Oberflächen mit geringerer Rauheit bilden und zum anderen lichtdurchlässig und somit transparent oder zumindest transluzent sind.

Aufgrund der Verwendung amorphen Kunststoffs können äußere Oberflächen geringer Rauheit werkzeugfallend, d. h. unmittelbar aus dem Umformprozess, erzeugt werden. Es lassen sich Oberflächen mit gemittelten Rautiefen (Zehnpunkthöhe) R_{z} aus dem Bereich von 0.2 bis 5 µm, vorteilhafterweise aus dem Bereich von 0.2 bis 3, µm erzeugen, so dass sich an der Oberfläche kein Schmutz festsetzen kann. Bauteile mit Rautiefen R_{z} aus der unteren Hälfte des genannten Bereichs sind besonders vorteilhaft.

Die erste Thermoplastschicht bildet die äußere Thermoplastschicht und somit alleine oder zusammen mit der ersten Faserschicht die äußere Oberfläche der Mehrschichtverbundstruktur.

So kann sich eine beispielsweise als Gewebe gebildete erste Faserschicht insbesondere in Kreuzungsbereichen ihrer Endlosfasern nach außen vordrücken und in den Kreuzungsbereichen, grundsätzlich aber auch dazwischen, einen Teil der äußeren Oberfläche bilden. Eine im Mikrometerbereich liegende regelmäßige Welligkeit kann für die Oberfläche auch gewünscht sein. Die erste Thermoplastschicht ist abgesehen von optional eingebetteten Fasern der ersten Faserschicht frei von Fasern.

Die erste und die zweite Thermoplastschicht sind durchsichtig, zum Beispiel transluzent oder noch bevorzugter transparent. In einer Draufsicht auf die Mehrschichtverbundstruktur ist daher zumindest eine Faser- oder tiefer gelegene Thermoplastschicht durch die erste und die zweite Thermoplastschicht von außen erkennbar. Vorzugsweise weist die Mehrschichtverbundstruktur von ihrer äußeren Sichtfläche aus hintereinander mehrere lichtdurchlässige, vorzugsweise jeweils transparente Thermoplastschichten und mehrere in oder zwischen diesen Thermoplastschichten eingebettete Faserschichten auf, derart, dass diese Schichten in ihrer Gesamtheit, also zumindest mehrere oberflächennahe Thermoplast- und Faserschichten lichtdurchlässig, vorzugsweise transparent sind.

Die erste Faserschicht besteht aus durchsichtigem, vorzugsweise transparentes Fasermaterial. Ist die zweite Faserschicht die von der Oberfläche aus gesehen nächstfolgende Faserschicht, gilt Entsprechendes vorzugsweise auch für die zweite Faserschicht.

Eine oder mehrere lichtdurchlässige, der äußeren Oberfläche der Mehrschichtverbundstruktur nächste Thermoplastschichten kann oder können eingefärbt sein. Stattdessen oder zusätzlich können auch die Fasern einer oder mehrerer der Faserschichten lichtdurchlässig, vorzugsweise transparent, und farbig sein. So kann oder können beispielsweise von der Oberfläche aus gesehen nur die erste oder aber die erste und eine oder mehrere unmittelbar folgende Thermoplastschichten durchsichtig klar und eine oder mehrere durch diese klare oder klaren Schicht oder Schichten sichtbare im Schichtverbund weiter unten angeordnete Thermoplastschicht(en) eingefärbt oder undurchsichtig sein. Es können auch sämtliche Thermoplastschichten der Mehrschichtverbundstruktur lichtdurchlässig, vorzugsweise transparent, und zusätzlich klar oder farbig sein. Innerhalb der Abfolge der lichtdurchlässigen Thermoplastschichten kann eine oder können mehrere Faserschichten aus klar oder farbig lichtdurchlässigen, vorzugsweise transparenten, Fasern angeordnet sein.

Durch die Ausbildung einer oder mehrerer oberflächennahen Thermoplastschichten als lichtdurchlässige, vorzugsweise transparente Thermoplastschichten kann eine optische Tiefenwirkung erzielt werden. In bevorzugten Ausführungen lässt die wenigstens eine oder lassen die bevorzugt mehreren lichtdurchlässigen Thermoplastschichten von außen eine oder mehrere der in den lichtdurchlässigen Thermoplastschichten eingebetteten Faserstrukturen erkennen. In der einen oder den mehreren von außen erkennbaren Faserschichten sind die Fasern in ersten Varianten regelmäßig angeordnet, wobei Gelege und Gewebe bevorzugt werden. Dadurch entsteht ein besonders ansprechender optischer Eindruck. Der Beobachter erkennt, dass es sich um einen faserverstärkten Kunststoff entsprechend hoher Festigkeit und Stabilität handelt. Die Erfindung vereint somit für den Betrachter erkennbar die mechanischen Vorteile derartiger Strukturen mit einem ansprechenden optischen Erscheinungsbild. In zweiten Varianten kann durch die äußere Oberfläche hindurch eine als Vlies gebildete Faserschicht erkennbar sein. Mittels einer von außen erkennbaren Faserschicht aus Wirrfasern können ebenfalls optisch prägnante Sichtflächen geschaffen werden, insbesondere in Kombination mit dem bereits erläuterten Tiefeneffekt. So kann insbesondere unter wenigstens einer transparenten Thermoplastschicht und wenigstens einer darin eingebetteten oder unmittelbar darunter liegenden Faserschicht aus transparenten Fasern, vorzugsweise mehreren derartigen Thermoplastschichten und Faserschichten, eine als Vlies gebildete Faserschicht angeordnet sein, die aus undurchsichtigen oder farbig lichtdurchlässigen Fasern besteht. Grundsätzlich kann auch die erste Faserschicht ein Vlies sein.

Als Fasermaterial kommen insbesondere Glasfasern und Kunststofffasern in Betracht, entweder klare oder farbige, optional metallisierte Glasfasern oder Kunststofffasern. Alternativ oder ergänzend können auch Carbon-, Basalt-, Metall- oder Naturfasern, wie etwa Flachsfasern, oder undurchsichtige Glas- oder Kunststofffasern verwendet werden, um eine, mehrere oder jede der Faserschichten zu bilden. Bevorzugt besteht wenigstens die der äußeren Oberfläche nächste, erste Faserschicht oder bestehen zumindest die der äußeren Oberfläche nächsten Faserschichten aus lichtdurchlässigen Fasern. So kann oder können eine oder mehrere Thermoplastschichten und eine oder mehrere Faserschichten, die der äußeren Oberfläche der Mehrschichtverbundstruktur am nächsten sind, insgesamt entweder transluzent oder transparent und vorzugsweise klar sein und eine unter dieser beispielsweise transparent klaren Schichtabfolge liegende weitere Faserschicht oder Thermoplastschicht undurchsichtig oder opak oder aber lichtdurchlässig farbig sein.
Die Faserschichten können mit Vorteil im Hinblick auf eine hohe Zugfestigkeit in eine einzige oder mehrere unterschiedliche Vorzugsrichtungen oder eine hohe Verwindungssteifigkeit, bevorzugt beides in Kombination, angeordnet sein. So können die Faserschichten beispielsweise durch Gewebe mit von Gewebe zu Gewebe unterschiedlicher Flächendichte oder unterschiedlichem Webmuster gebildet werden. Ebenso können als Gewebe gebildete Faserschichten und als Gelege oder Maschenware oder Vlies gebildete Faserschichten miteinander kombiniert werden. Es können auch Faserschichten aus unterschiedlichen Materialien, beispielsweise Faserschichten aus Glas- oder Kunststofffasern und Faserschichten aus Carbonfasern, Basaltfasern, Metallfasern, Kunststofffasern oder Naturfasern miteinander kombiniert werden, um einerseits beispielsweise den erläuterten Tiefeneffekt und andererseits eine der Funktion der Mehrschichtverbundstruktur entsprechende Festigkeit oder Stabilität zu erzielen.
Die dreidimensional geformte Mehrschichtverbundstruktur kann auch an einer von der ersten Thermoplastschicht abgewandten Rückseite eine Oberfläche in Faser-Sichtoptik aufweisen, so dass im eingebauten Zustand auch die Rückseite eine Sichtfläche bilden kann. So kann ein bewegliches Karosserieanbauteil, wie etwa eine Motorhaube, eine Fahrzeugtür oder eine Heckklappe, an ihrer im eingebauten Zustand einen Bereich der Außenseite des Fahrzeugs bildenden äußeren Oberfläche wie erläutert in Faser-Sichtoptik ausgeführt sein und auch eine in Faser-Sichtoptik ausgeführte Rückseite aufweisen. So kann beispielsweise eine Fahrzeugtür oder Heckklappe, die üblicherweise aus einer äußeren Schalenstruktur und einer inneren Schalenstruktur zusammengesetzt ist, zumindest im Wesentlichen in einem Stück aus einer erfindungsgemäßen Mehrschichtverbundstruktur gebildet werden. Für die in Faser-Sichtoptik ausgeführte Rückseite gelten die Ausführungen zur äußeren Oberfläche der Vorderseite, den Schichten und optischen Gestaltungen gleichermaßen.

Zu den Faserschichten ist noch anzumerken, dass eine oder mehrere der Faserschichten elektrisch oder bevorzugter noch optisch leitende Fasern enthalten oder gegebenenfalls auch aus derart leitfähigen Fasern bestehen kann oder können. Als leitfähige Fasern kommen insbesondere Metallfasern, metallisierte Fasern und Fasern aus elektrisch oder bevorzugt optisch leitfähigem Kunststoff in Betracht. Solch eine Mehrschichtverbundstruktur kann im Fahrzeug zur Übertragung von elektrischen oder vorzugsweise optischen Signalen oder Energie verwendet werden.

Die erfindungsgemäße Mehrschichtverbundstruktur wird durch Thermoformung aus einem Halbzeug, vorzugsweise einem plattenförmigen Halbzeug, hergestellt. Das Halbzeug weist die Schichtung der umgeformten Mehrschichtverbundstruktur bereits auf. Die für die einbaufertige Mehrschichtverbundstruktur gewünschte Optik, beispielsweise eine bestimmte Faserstruktur, ist im Halbzeug bereits erkennbar. Bevorzugterweise wird die für die einbaufertige Struktur geforderte Oberflächenqualität bereits im Halbzeug erreicht.

Die Verwendung amorpher Kunststoffe in Kombination mit einer Faserverstärkung in Form von Flächengebilden aus Endlosfasern, insbesondere von Geweben oder Gelegen, oder Vliesen ermöglicht die Formung einer dreidimensionalen Mehrschichtverbundstruktur, d. h. einer Schalenstruktur, mit einer Oberfläche in Faser-Sichtoptik werkzeugfallend. Dies bedeutet, dass die Mehrschichtverbundstruktur nach Abkühlung und Entnahme aus dem Umformwerkzeug bereits eine äußere Oberfläche in Faser-Sichtoptikqualität aufweist. Bezüglich ihrer Oberfläche ist solch eine Mehrschichtverbundstruktur unmittelbar für den Einbau im Fahrzeug als Außenhautbauteil einer Fahrzeugkarosserie oder eines Fahrzeuganbauteils wie etwa einer Motorhaube oder einer geeignet. Eine Oberflächenbearbeitung oder Lackierung ist nicht mehr erforderlich, um eine Oberfläche in Faser-Sichtoptik zu erreichen. Die Mehrschichtverbundstruktur kann dementsprechend mit der äußeren Oberfläche, wie sie unmittelbar aus dem Umformprozess erhalten wird, in das Fahrzeug eingebaut werden. Allerdings kann die aus dem Umformprozess erhaltene schalenförmige Mehrschichtverbundstruktur in anderer Hinsicht noch bearbeitet werden, beispielsweise durch Bearbeitung eines äußeren Umfangsrands oder Schaffung eines Durchgangs oder, wie beispielsweise im Falle einer Motorhaube oder einer Tür, durch Schaffung von Verbindungsstrukturen für eine bewegliche Lagerung am Fahrzeug.
Die Erfindung betrifft aber nicht nur eine einbaufertige Mehrschichtverbundstruktur, deren äußere Oberfläche von der äußeren Thermoplastschicht der umgeformten Mehrschichtverbundstruktur gebildet wird, sondern auch Sichtstrukturen, die zwar die Mehrschichtverbundstruktur mit einer Oberfläche in der Qualität einer Faser-Sichtoptik aufweisen, bei denen aber diese Oberfläche lackiert ist. Der Lack, der in solchen Ausführungen die äußere Oberfläche der einbaufertigen Mehrschichtverbundstruktur bildet, kann ein undurchsichtiger farbiger Lack sein, also einer bei Fahrzeugen üblichen Lackierung entsprechen. Bevorzugter handelt es sich um einen lichtdurchlässigen, noch bevorzugter um einen transparenten Lack. Insbesondere kann es sich um einen Klarlack handeln.

Die erfindungsgemäße Sichtstruktur ist aufgrund ihrer Faser-Sichtoptik ein Exterieurbauteil eines Fahrzeugs. Die Erfindung zielt insbesondere auf Personenkraftwagen ab. Der Nutzfahrzeugbau und auch der Schienenfahrzeugbau sind aber ebenfalls Anwendungsgebiete. Im Automobilbereich ist die erfindungsgemäße Sichtstruktur im Exterieurbereich eine Seitenwand, ein Kotflügel, eine Motorhaube, Heckklappe oder Tür, ein Dach oder ein Spoiler.

Die Erfindung hat auch ein Verfahren nach Anspruch 9 zur Herstellung der Sichtstruktur zum Gegenstand. In dem Verfahren wird eine flächenhafte Ausgangs-Mehrschichtverbundstruktur, die die wenigstens drei Thermoplastschichten und die wenigstens zwei zwischen den Thermoplastschichten eingebetteten Faserschichten aufweist, bis wenigstens auf Schmelztemperatur, vorzugsweise über Schmelztemperatur, jeder der Thermoplastschichten erwärmt und im warmen Zustand zwischen einer ein- oder mehrteiligen Matrize und einer ein- oder mehrteiligen Patrize eines Umformwerkzeugs bis in eine Endform mit einer äußeren Oberfläche in Faser-Sichtoptik werkzeugfallend umgeformt. Die eingebetteten Faserschichten sind jeweils Flächengebilde aus Endlosfasern oder Vliese. Sie können insbesondere, wie bereits erwähnt, jeweils ein Gewebe oder Gelege, auch Maschenware, also ein Gewirke oder Gestricke sein. Vliese, insbesondere Vliese aus zumindest im Wesentlichen Endlos- oder Langfasern, sind ebenfalls bevorzugte Kandidaten für eine oder mehrere Faserschichten der Mehrschichtverbundstruktur. Eine Vliesschicht, insbesondere eine durch die äußere Oberfläche erkennbare Vliesschicht, kann insbesondere aus Glasfasern oder lichtdurchlässigen Kunststofffasern, vorzugsweise eingefärbten oder metallisierten Fasern, bestehen. Die als Halbzeug vorliegende Ausgangs-Mehrschichtverbundstruktur entspricht hinsichtlich des Schichtaufbaus der umgeformten Mehrschichtverbundstruktur, d. h. die Schichtabfolge wird bei der Umformung nicht verändert, es wird auch keine Schicht hinzugefügt.

Die Mehrschichtverbundstruktur wird vorzugsweise vor der Umformung außerhalb des Umformwerkzeugs auf den warmen Zustand oder bis nahe zur Umformtemperatur erwärmt und mittels einer Spanneinrichtung faltenfrei in das offene Umformwerkzeug eingebracht. Sie kann aber stattdessen auch bei geöffnetem Werkzeug zwischen Matrize und Patrize gehalten auf die für die Umformung erforderliche Temperatur erwärmt werden, wobei sie während des Erwärmens vorzugsweise weder mit der Matrize noch mit der Patrize Kontakt hat, sondern frei zwischen Matrize und Patrize gehalten wird. Die Erwärmung kann auch in mehreren Schritten vorgenommen werden. So kann vorzugsweise der größere Teil des Wärmeeintrags in die Mehrschichtverbundstruktur außerhalb des Umformwerkzeugs, beispielsweise in einem Ofen wie etwa einem Durchlaufofen, vorgenommen und die so erwärmte Mehrschichtverbundstruktur anschließend in das geöffnete Umformwerkzeug verbracht, zwischen Matrize und Patrize positioniert und im positionierten Zustand auf eine für die Umformung günstige Endtemperatur erwärmt werden, beispielsweise mittels Infrarot(IR)-Bestrahlung. Wenn die Mehrschichtverbundstruktur die Umformtemperatur aufweist, wird das Werkzeug geschlossen und die Mehrschichtverbundstruktur dadurch in die Endform umgeformt. Zweckmäßigerweise wird sie von der Spanneinrichtung aufgenommen und in der Spanneinrichtung erwärmt, beispielsweise in einem Ofen oder einer Infrarot(IR)-Bestrahlungseinrichtung. Vorzugsweise kühlt die Mehrschichtverbundstruktur bei der Umformung aufgrund Wärmeableitung über das Umformwerkzeug bereits wieder ab. Falls erforderlich, kann sie nach dem Umformen noch im Werkzeug gehalten und im Kontakt mit Matrize und Patrize rekonsolidiert werden, bis die Fasern der umgeformten Mehrschichtverbundstruktur eine für die Entnahme erforderliche mechanische Stabilität verleihen.

Die Spanneinrichtung kann einen Spannrahmen und über den Umfang des Spannrahmens verteilt angeordnete Spannglieder aufweisen. Die Mehrschichtverbundstruktur wird im umformbaren, warmen Zustand im Spannrahmen mittels der Spannglieder gehalten und auf Zug gespannt. Sie kann in diesem Zustand in das offene Werkzeug zwischen Matrize und Patrize eingebracht oder wie bereits erwähnt zwischen Matrize und Patrize gehalten erstmals oder weiter erwärmt werden. Die Spanneinrichtung ist vorzugsweise der Größe und Form nach so gestaltet, dass die Mehrschichtverbundstruktur im gespannten Zustand gehalten werden kann, bis das Umformwerkzeug geschlossen ist oder durch das Halten auf Spannung sichergestellt ist, dass die Mehrschichtverbundstruktur faltenfrei zwischen Matrize und Patrize zu liegen kommt. Die Spanneinrichtung kann so gestaltet sein, dass die Mehrschichtverbundstruktur bei oder nach dem Zusammenfahren von Matrize und Patrize von der Spanneinrichtung gelöst und die Spanneinrichtung entfernt werden kann. In einer vorteilhaften Verfahrensführung wird die Mehrschichtverbundstruktur auch noch während des Umformens, während die Matrize und die Patrize zusammenfahren und dabei bereits formend auf die Mehrschichtverbundstruktur einwirken, im gespannten Zustand gehalten, vorzugsweise bis das Werkzeug geschlossen und der Umformprozess abgeschlossen ist. Die Spanneinrichtung kann dafür eingerichtet sein, dass sie für den Umformprozess nicht von der Mehrschichtverbundstruktur gelöst werden muss, sondern die Mehrschichtstruktur nach Durchführung der Umformung und Öffnen des Werkzeugs mittels der Spanneinrichtung aus dem Werkzeug genommen, diese also auch zur Entnahme als Handhabungseinrichtung für die Mehrschichtverbundstruktur verwendet werden kann.

Die Spannglieder sind in bevorzugten Ausführungen Federeinrichtungen, vorzugsweise mechanische oder beispielsweise pneumatische Federeinrichtungen. Die Spannglieder können insbesondere jeweils einen Halteteil und einen Federteil aufweisen. Der Halteteil dient dazu, die Mehrschichtverbundstruktur im warmen Zustand und zweckmäßigerweise auch bereits während des Erwärmens am Rand oder in einem randnahen Bereich zu halten, vorzugsweise klemmend, während der Federteil auf die Mehrschichtverbundstruktur eine elastische Zugkraft ausübt. Der Federteil ist vorteilhafterweise so ausgebildet, dass die Federkraft über den im praktischen Gebrauch zum gespannten Halten der Mehrschichtverbundstruktur erforderlichen Federweg zumindest im Wesentlichen konstant ist. Der Federteil kann insbesondere als Rollfeder gebildet sein oder eine Rollfeder als Federglied umfassen. In alternativen Ausführungen sind die Spannglieder als elektromagnetische Spannglieder oder fluidische, also hydraulische oder pneumatische Spannglieder ausgeführt und weisen jeweils einen Halteteil der erläuterten Art und einen elektromotorisch oder fluidisch arbeitenden Spannteil, der den erläuterten Federteil ersetzt, auf. Die Spanneinrichtung kann für derartige Spannglieder eine Steuerungs- oder Regelungseinrichtung umfassen, um die Zugspannung einzustellen. Ferner kann die Spanneinrichtung ein oder mehrere Spannglieder mit mechanischem oder pneumatischen Federteil und ein oder mehrere elektromotorische oder fluidisch angetriebene Spannglieder in Kombination aufweisen.

Eine zum Halten der Mehrschichtverbundstruktur in der geschilderten Art geeignete Spanneinrichtung ist grundsätzlich vorteilhaft, um Kunststoffstrukturen im warmen Zustand faltenfrei in ein Umformwerkzeug einbringen oder im Umformwerkzeug positionieren zu können. Die Spanneinrichtung ist dementsprechend nicht auf eine Verwendung zum Halten einer Mehrschichtverbundstruktur mit erfindungsgemäßem Schichtaufbau beschränkt. Sie kann vielmehr mit Vorteil auch in Verbindung mit anderen flächenhaften Kunststoffstrukturen, insbesondere faserverstärkten Kunststoffstrukturen, verwendet werden. Die Anmelderin behält es sich vor, auf die Spanneinrichtung auch als solche, insbesondere eine Spanneinrichtung gemäß Anspruch 14, oder in der Verwendung zum Halten einer flächenhaften Kunststoffstruktur der erfindungsgemäßen oder anderer Art eine Teilungsanmeldung zu richten.

Um ein Bauteil mit Faser-Sichtoptik zu erhalten, sind die Matrize und die Patrize des Umformwerkzeugs in bevorzugten Ausführungen so aneinander angepasst geformt, dass die Kavität des geschlossenen Umformwerkzeugs, in der beim Umformen die Mehrschichtverbundstruktur aufgenommen ist, der Materialstärke der umgeformten Mehrschichtverbundstruktur entspricht. Die Anpassung ist in anderen Worten derart, dass bei geschlossenem Umformwerkzeug auf die Mehrschichtverbundstruktur über deren Fläche gesehen ein Druck wirkt, der auch in unterschiedlich stark gekrümmten Flächenbereichen der Mehrschichtverbundstruktur zumindest im Wesentlichen die gleiche Größe aufweist. Vorzugsweise wirkt zumindest über den Teil der Fläche der Mehrschichtverbundstruktur, der anschließend die Sichtfläche der einbaufertigen Mehrschichtverbundstruktur bildet, ein überall zumindest im Wesentlichen gleich großer Druck, so dass über die Sichtfläche gesehen Druckdifferenzen vermieden werden.

Wird im erfindungsgemäßen Verfahren ein Halbzeug beispielsweise überall gleicher Dicke, wie etwa ein plattenförmiges Halbzeug, verwendet, bedeutet die Anpassung der Werkzeugkavität, dass die Spaltweite der Kavität dennoch variiert. Aufgrund der eingebetteten Faserschichten, insbesondere der Einbettung von Faserschichten, deren Fasern einander kreuzen, wie etwa bei jeder Form eines Gewebes, einer Maschenware oder eines Geleges mit einander überkreuzenden Endlosfasern, werden die Fasern bei der Drapierung in Bereichen dreidimensionaler Umformung geschert, was mit einer Materialaufdickung in diesen Bereichen einhergeht, die in Flächenbereichen mit starker Krümmung besonders ins Gewicht fallen kann. Der thermoplastische Kunststoff kann bei der Umformung zumindest zu einem Teil verdrängt werden bzw. ausweichen. Die durch Krümmungsbereiche von Matrize und Patrize verlaufenden Endlosfasern können dies hingegen nicht. In Bereichen, in denen die Mehrschichtverbundstruktur durch die Fasern bedingt aufdickt, wird die Spaltweite der Werkzeugkavität der Aufdickung entsprechend größer als in anderen Bereichen bemessen.

Bei dem Umformprozess können an die Mehrschichtverbundstruktur auch eine oder mehrere andere Strukturen, insbesondere Verstärkungsstrukturen wie etwa Verstärkungsstege, angeformt werden. In derartigen Weiterentwicklungen wird oder werden eine oder mehrere Anformstrukturen in das Umformwerkzeug eingebracht, nämlich in oder an der Matrize oder Patrize positioniert und durch das Schließen des Umformwerkzeugs mit der dabei sich umformenden Mehrschichtverbundstruktur kontaktiert und mit dieser fest verbunden. Die eine oder die mehreren Anformstrukturen werden zweckmäßigerweise zumindest bis auf die Schmelztemperatur der Mehrschichtverbundstruktur, vorzugsweise über diese Schmelztemperatur, erwärmt. Dies kann wie bereits zur Mehrschichtverbundstruktur geschildert komplett außerhalb des Umformwerkzeugs oder komplett im positionierten Zustand im Umformwerkzeug oder in einer mehrstufigen Erwärmung zunächst außerhalb des Umformwerkzeugs und anschließend auf Endtemperatur im Werkzeug vorgenommen werden. Bei Erwärmung im Werkzeug, kann oder können die Anformstrukturen gemeinsam mit der Mehrschichtverbundstruktur erwärmt werden. Die eine oder mehreren Anformstrukturen kann oder können beispielsweise Metall- oder Kunststoffstrukturen oder mit Kunststoff beschichtet sein, wobei der Kunststoff vorzugsweise so gewählt ist, dass er bei der Temperatur, auf die die Mehrschichtverbundstruktur erwärmt wird, noch ausreichend fest ist und bei dem Fügen im Werkzeug nicht seine Form verliert. Die Fügeverbindung von Mehrschichtverbundstruktur und jeweiliger Anformstruktur kann rein formschlüssig, bevorzugter form- und reibschlüssig oder stattdessen oder ergänzend auch stoffschlüssig sein. Eine oder mehrere Anformstrukturen können wie bereits erwähnt der Versteifung der umgeformten Mehrschichtverbundstruktur dienen, beispielsweise als Verrippungen, oder zur Erfüllung einer bestimmten Zusatzfunktion angeformt werden. Insbesondere zur Versteifung ist ferner auch denkbar, Kunststoffmaterial gegen die spätere Rückseite einzuspritzen, entweder nach der Umformung im Umformwerkzeug oder auch bereits im Umformwerkzeug, indem die an der späteren Rückseite anliegende Matrize oder Patrize um eine entsprechende Einspritzeinrichtung erweitert ist.

Vorteilhafte Merkmale werden auch in den Unteransprüchen offenbart.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend erläuterten Ausgestaltungen vorteilhaft weiter. Es zeigen:
- Figur 1: ein Fahrzeug mit äußeren Sichtstrukturen erfindungsgemäßer Art,
- Figur 2: ein Halbzeug für die Herstellung einer erfindungsgemäßen Mehrschichtverbundstruktur,
- Figur 3: ein weiteres Halbzeug für die Herstellung einer erfindungsgemäßen Mehrschichtverbundstruktur,
- Figur 4: eine Spanneinrichtung, die eine Mehrschichtverbundstruktur im warmen Zustand gespannt hält,
- Figur 5: ein Umformwerkzeug zur dreidimensionalen Umformung der erwärmten Mehrschichtverbundstruktur,
- Figur 6: das Umformwerkzeug mit der aufgenommenen Mehrschichtverbundstruktur im bereits vollständig umgeformten Zustand und
- Figur 7: einen oberflächennahen Bereich der umgeformten Mehrschichtverbundstruktur.

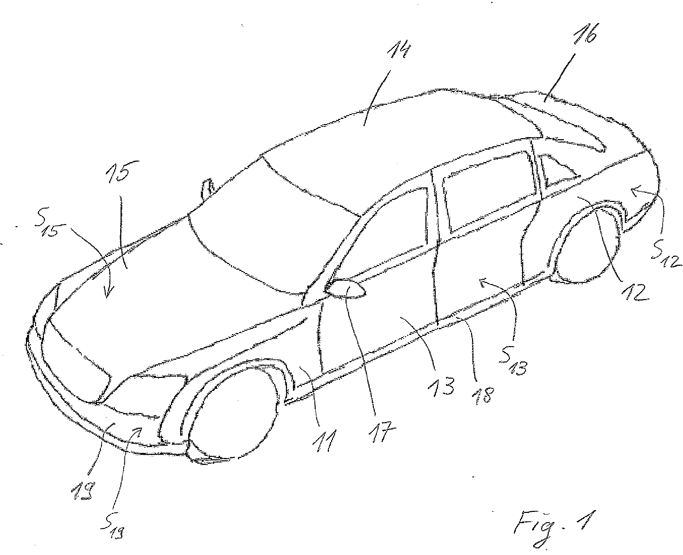

Figur 1 zeigt ein Fahrzeug mit Sichtstrukturen, von denen eine oder mehrere jeweils als erfindungsgemäße Mehrschichtverbundstruktur gebildet ist oder sind. Dabei handelt es sich um eine vordere Seitenwand 11 und eine hintere Seitenwand 12 bzw. Kotflügel, vordere und hintere Türen 13, ein Dach 14, eine Motorhaube 15, eine Heckklappe 16, ein Seitenspiegelgehäuse 17, einen Schweller 18 und einen Stoßfänger 19. Die Sichtfläche der jeweiligen Sichtstruktur i ist mit Sᵢ bezeichnet, so beispielsweise die äußere Oberfläche S₁₂ der hinteren Seitenwand 12 und die äußere Oberfläche S₁₃ einer der Türen 13. Eine oder mehrere der Oberflächen Sᵢ ist oder sind Oberflächen in Faser-Sichtoptik.

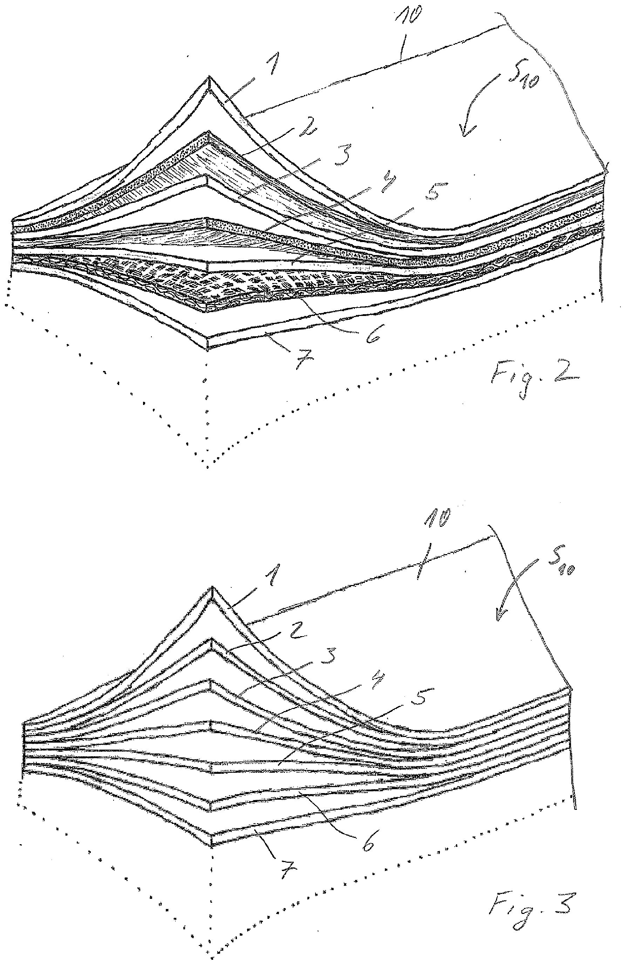

Figur 2 zeigt eine Mehrschichtverbundstruktur 10 als Ausgangsstruktur, aus der eine erfindungsgemäße Mehrschichtverbundstruktur, insbesondere jede der Sichtstrukturen 11 bis 19, durch Thermoformung hergestellt werden kann. Die Mehrschichtverbundstruktur 10 liegt noch als Halbzeug vor, nämlich als dünne, optional flexible Platte. Durch die dreidimensionale Umformung wird aus der plattenförmigen Mehrschichtverbundplatte 10 eine ausreichend verwindungssteife Schalenstruktur geformt.
Die als Ausgangsstruktur dienende Mehrschichtverbundstruktur 10 ist ein Organoblech und besteht entsprechend aus thermoplastischem Kunststoff und im Kunststoff eingebetteten Verstärkungsfasern. Die Verstärkungsfasern sind in jeweils einem regelmäßigen Muster zu mehreren Flächengebilden wie insbesondere Gewebe oder Gelege angeordnet oder als Vlies gebildet. Die Flächengebilde sind in Dickenrichtung übereinander angeordnet und bilden dadurch jeweils eine Faserschicht. Im Beispiel sind die Verstärkungsfasern in einem oberflächennahen Dickenbereich der Mehrschichtverbundstruktur 10 ausschließlich Endlosfasern, die in der jeweiligen Faserschicht regelmäßig angeordnet sind. Die Faserschichten werden in der Darstellung durch thermoplastischen Kunststoff voneinander getrennt, sind aber vom Kunststoff auch durchtränkt. Übereinander angeordnete Faserschichten können sich aber auch über jeweils ihre gesamte Fläche oder auch nur in Flächenteilbereichen berühren. Durch die Faserschichten wird auch in Bezug auf den Kunststoff ein schichtartiger Aufbau erhalten. Die Faserschichten unterteilen den Kunststoff in Thermoplastschichten. In der Schichtung kann eine oder können mehrere der Thermoplastschichten übereinanderliegende Faserschichten räumlich voneinander trennen. Eine oder mehrere der Faserschichten können einander aber auch berühren, so dass zwischen solchen Faserschichten keine räumlich trennende Thermoplastschicht vorhanden ist, sondern die beiden Thermoplastschichten, in denen die einander berührenden Faserschichten eingebettet sind, unmittelbar aufeinanderliegen. Das Halbzeug kann beispielsweise durch Laminieren von Thermoplastfolien und Faserschichten gebildet werden, beispielsweise auf einer Intervallheißpresse oder einer Doppelbandpresse. Stattdessen kann das Halbzeug aber beispielsweise auch durch Legen der Faserschichten und Auftragen des Kunststoffs, wie etwa durch Streichen oder Sprühen oder Tapelegen, hergestellt werden. Die Thermoplastschichten können insbesondere aus dem gleichen Kunststoffmaterial, grundsätzlich aber auch aus unterschiedlichem thermoplastischen Kunststoff bestehen.

Mit S₁₀ ist eine der beiden äußeren Oberflächen der als Halbzeug vorliegenden Mehrschichtverbundstruktur 10 bezeichnet. Es sei angenommen, dass diese Oberfläche S₁₀ nach der Umformung der Mehrschichtverbundstruktur 10 im eingebauten Zustand die Sichtfläche, beispielsweise die äußere Oberfläche S₁₂ oder S₁₃ oder die äußere Oberfläche Sᵢ einer der anderen Sichtstrukturen i des Fahrzeugs der Figur 1 bildet. Im Schichtaufbau oder nur schichtartigen Aufbau der Mehrschichtverbundstruktur 10 sind die Schichten von der Oberfläche S₁₀ ausgehend in Dickenrichtung durchnummeriert. So umfasst die Mehrschichtstruktur 10 eine erste Thermoplastschicht 1, eine zweite Thermoplastschicht 3, eine dritte Thermoplastschicht 5, eine vierte Thermoplastschicht 7 und optional darunterliegend eine oder mehrere weitere Thermoplastschichten. Zwischen je zwei der Thermoplastschichten ist jeweils eine Faserschicht angeordnet, nämlich eine erste Faserschicht 2, eine zweite Faserschicht 4, eine dritte Faserschicht 6 und optional darunterliegend eine oder mehrere weitere Faserschichten. Die Faserschichten 2 und 4 sind im Beispiel jeweils ein Gelege von Endlosfasern, während die Faserschicht 6 ein Gewebe ist. Die Abfolge könnte beispielsweise auch umgekehrt werden, so dass in der umgekehrten Abfolge die der Oberfläche S₁₀ nächste Faserschicht 2 ein Gewebe und die beiden anderen Faserschichten 4 und 6 ein Gelege wären. Es könnten auch zwei der drei oberen Faserschichten 2, 4 und 6 oder alle drei Faserschichten 2, 4 und 6 jeweils als Gewebe gebildet sein, um nur Beispiele vorteilhafter Schichtabfolgen zu nennen. In den Gelegen können die Endlosfasern einander kreuzen oder, wie im Ausführungsbeispiel angedeutet, nur parallel nebeneinander verlaufen. Eine oder mehrere der Faserschichten 2, 4 und 6 kann oder können jeweils auch ein Vlies sein.

Die Thermoplastschichten können insbesondere SAN, PC, PMMA oder TPU-Schichten sein. Jedenfalls ist die die Oberfläche S₁₀ bildende Thermoplastschicht 1 aus amorphem Kunststoff gebildet. Vorzugsweise sind auch die darunterliegenden Thermoplastschichten 3 und 5 und vorzugsweise auch die Thermoplastschicht 7 und noch bevorzugter auch optional darunterliegende weitere Thermoplastschichten aus amorphem Kunststoff gebildet. Die der Oberfläche S₁₀ nächste Faserschicht 2 und bevorzugt auch die Faserschicht 4 und vorzugsweise auch noch die Faserschicht 6, ist oder sind vorteilhafterweise aus lichtdurchlässigen, bevorzugt transparenten Fasern gebildet. Zweckmäßigerweise handelt es sich um Glas- oder Kunststofffaserschichten. Das lichtdurchlässige Fasermaterial kann gefärbt oder metallisiert sein. Die oberste oder die oberen Faserschichten, wie insbesondere die Faserschicht 2 bzw. die Faserschichten 2 und 4 und optional auch die nächst darunter gelegene Faserschicht 6, kann oder können jedoch auch aus lichtdurchlässig klaren Fasern bestehen oder solche zumindest enthalten. Bildet die oberste Faserschicht 2 unmittelbar Stellen der Oberfläche S₁₀, ist es von Vorteil, wenn die Faserschicht 2 aus transparenten, farbigen oder metallisierten oder vorzugsweise klaren Endlosfasern besteht. Von der äußeren Oberfläche S₁₀, der späteren Sichtfläche, weiter entfernte Faserschichten, soweit solche vorhanden sind, können auch aus undurchsichtigem Fasermaterial bestehen. Grundsätzlich gilt dies allerdings auch für jede der oberen Faserschichten 2, 4 und 6. Als alternatives Fasermaterial oder als nur in tieferen Faserschichten verwendetes Fasermaterial kommen insbesondere Carbonfasern, aber auch Basaltfasern, Metallfasern, Glasfasern, Kunststofffasern und Naturfasern wie etwa Flachsfasern in Betracht. Durch Kombination unterschiedlicher Faserschichten, die sich dem Faserwerkstoff, der Rovingstärke, der Flächendichte, der Farbe oder insbesondere der Anordnung der Endlosfasern nach unterscheiden, können die optischen oder mechanischen Eigenschaften des durch Umformung herzustellenden Bauteils in weiten Grenzen den aufzunehmenden Lasten angepasst werden. Ferner können optische Effekte, insbesondere ein bestimmtes Faser-Design oder eine optische Tiefenwirkung, aufgrund der Lichtdurchlässigkeit der oberen Thermoplastschichten erzeugt werden.

In Figur 3 ist die Mehrschichtverbundstruktur 10 immer noch als Halbzeug in einer gegenüber Figur 2 verallgemeinerten Form dargestellt, verallgemeinert in Bezug auf die Faserschichten 2, 4 und 6, um anzudeuten, dass hinsichtlich der Wahl des Typs der jeweiligen Faserschicht, beispielsweise Gewebe, Gelege oder auch Maschenware oder Vlies, keine grundsätzliche Begrenzung besteht, sondern die Faserschichten dem zu erwartenden Lastfall und dem gewünschten Faserdesign bzw. optischen Erscheinungsbild entsprechend ausgewählt werden können. Die Abfolge der Schichten 1 bis 7 und optional weiterer Schichten bleibt bei der Umformung erhalten. Die äußere Thermoplastschicht 1 des Halbzeugs bildet auch nach dem Umformen die eine der beiden äußeren Schichten der Mehrschichtverbundstruktur 10. Durch die Umformung, d. h. die Drapierung und Pressung, werden allenfalls die Durchdringung der Faserschichten durch den Thermoplastwerkstoff und dadurch die Einlagerung der Fasern in der Kunststoffmatrix verbessert. Die Thermoplastschicht 1 kann eine Deckhaut und somit die gesamte äußere Oberfläche S₁₀ der umgeformten Mehrschichtverbundstruktur 10 und optional auch der daraus erhaltenen, einbaufertigen Sichtstruktur bilden. Stattdessen kann sich die oberste Faserschicht 2 aber auch stellenweise durchdrücken und somit lokal unmittelbar Bereiche der Oberfläche S₁₀ bilden. Solch eine Mehrschichtverbundstruktur 10 weist eine äußere Oberfläche S₁₀ auf, die sich aus Flächenbereichen des thermoplastischen Kunststoffmaterials der Thermoplastschicht 1 und aus Faserbereichen der Faserschicht 2 der geometrischen Struktur der Faserschicht 2 entsprechend zusammensetzt.

Zur Herstellung einer erfindungsgemäßen Sichtstruktur Sᵢ wird die plattenförmige Mehrschichtverbundstruktur 10 zugeschnitten oder durch ein anderes geeignetes Trennverfahren auf die erforderliche Größe gebracht, auf eine Temperatur, die wenigstens so groß wie die Schmelztemperatur, vorzugsweise höher als die Schmelztemperatur des thermoplastischen Polymermaterials ist, erwärmt und warm umgeformt. Günstig ist eine Temperatur, die 20 bis 40 °C über der Schmelztemperatur des Polymers liegt. Um die Mehrschichtverbundstruktur 10 im warmen Zustand faltenfrei in ein Umformwerkzeug einlegen zu können, wird sie mittels einer Spanneinrichtung gehalten und im warmen Zustand auf Zug gespannt, wobei der dabei herrschende Zugspannungszustand der Mehrschichtverbundstruktur 10 derart ist, dass die warme Mehrschichtverbundstruktur 10 wie gesagt faltenfrei, d. h. ohne Verwerfungen, aber ohne ins Gewicht fallende Einschnürungen mittels der Spanneinrichtung gehalten wird. Die Mehrschichtverbundstruktur 10 kann vorteilhafterweise bereits vor dem Erwärmen in der Spanneinrichtung angeordnet oder mittels der Spanneinrichtung aufgenommen und mittels der Spanneinrichtung gehalten erwärmt werden.

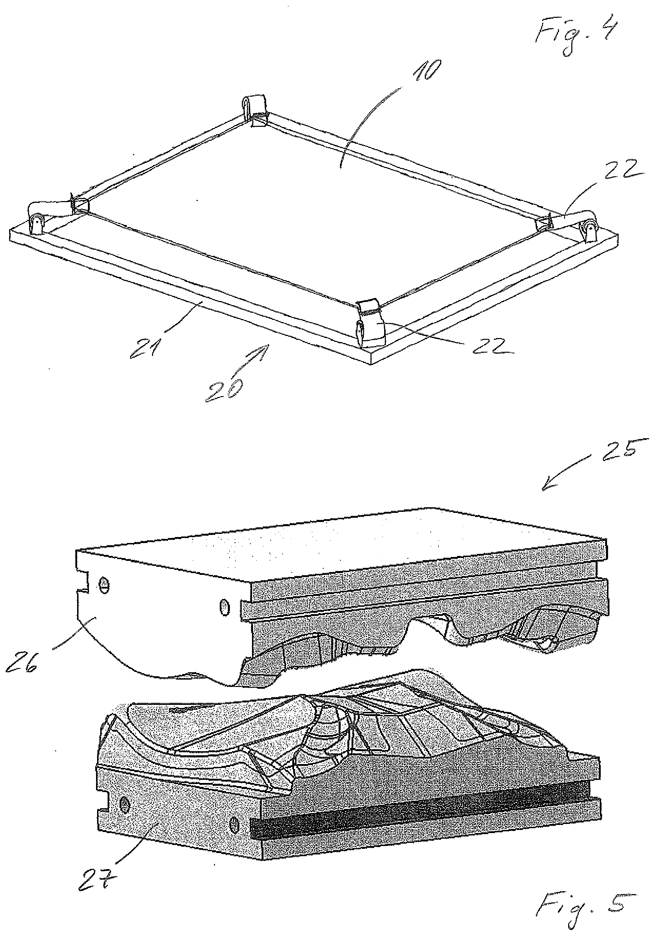

Figur 4 zeigt solch eine Spanneinrichtung 20 mit der darin frei von Verwerfungen bzw. Falten gehaltenen Mehrschichtverbundstruktur 10. Die Mehrschichtverbundstruktur 10 wird zweckmäßigerweise noch im kalten Zustand mittels der Spanneinrichtung 20 aufgenommen und während der Erwärmung gehalten. Die Spanneinrichtung 20 umfasst einen Spannrahmen 21 und mehrere Spannglieder 22, die über den Umfang des Spannrahmens 21 verteilt angeordnet sind, so dass die Mehrschichtverbundstruktur 10 über ihren äußeren Rand gesehen an mehreren Stellen mittels der Spannglieder 22 gehalten und der Faseranordnung angepasst unter Zugspannung gesetzt wird. Die Spannglieder 22 umfassen jeweils einen Halteteil, mit dem sie die Mehrschichtverbundstruktur 10 am Rand halten, beispielsweise klemmen, und einen Spann- und Führungsteil, mittels dem sie die Mehrschichtverbundstruktur 10 je mittels Zugkraft nach außen, zum umgebenden Spannrahmen 21 hin spannen und auch führen. Der Spann- und Führungsteil kann ein elektromotorischer Spann- und Führungsteil oder ein fluidischer, d. h. hydraulischer oder pneumatischer Spann- und Führungsteil sein. Im Ausführungsbeispiel weisen die Spannglieder 22 jeweils einen Federteil als Spann- und Führungsteil auf. Beispielhaft handelt es sich wie bevorzugt um einen Federteil mit mechanischer Feder. Die Spannglieder 22 halten vorzugsweise eine bestimmte Spannkraft ein. Der Federteil jedes der Spannglieder 21 kann insbesondere als Rollfeder gebildet sein oder eine Rollfeder umfassen. Rollfedern sind deshalb vorteilhaft, weil sie über einen ausreichend großen Federweg eine zumindest im Wesentlichen gleich große Federkraft erzeugen. Grundsätzlich können jedoch auch Federn eines andern Typs, gegebenenfalls auch pneumatische Federglieder verwendet werden.

Nach oder zum Erwärmen der Mehrschichtverbundstruktur 10, beispielsweise mit Infrarot(IR)-Strahlern oder auch konvektiv, wird die Mehrschichtverbundstruktur 10 mittels der Spanneinrichtung 20, im Spannrahmen 21, in das Werkzeug verbracht und so lange unter Zugspannung gehalten, bis sichergestellt ist, dass im Verlaufe des Schließens des Umformwerkzeugs in der Kavität des Werkzeugs keine Verwerfungen der warmen Mehrschichtverbundstruktur 10 auftreten, also nicht lokal Falten entstehen können, die im späteren Produkt, der erfindungsgemäßen Sichtstruktur Sᵢ zu optischen Störungen führen könnten.

Um die Mehrschichtverbundstruktur 10 auf eine für das Umformen günstige Temperatur zu erwärmen, kann die Mehrschichtverbundstruktur 10 im Spannrahmen 21 außerhalb des Werkzeugs 25 erwärmt werden, beispielsweise in einem Ofen, vorzugsweise Durchlaufofen, mittels der Spanneinrichtung 20 im bereits warmen Zustand im geöffneten Werkzeug 25 zwischen Matrize 26 und Patrize 27 positioniert und im positionierten Zustand auf die Umformtemperatur erwärmt werden, beispielsweise mittels einer IR-Bestrahlungseinrichtung. Anschließend kann das Werkzeug 25 durch Zusammenfahren von Matrize 26 und Patrize 27 geschlossen werden. Optional kann dieser Wärmeeintrag während des Zusammenfahrens fortgesetzt oder nur während des Zusammenfahrens vorgenommen werden.

In Figur 5 ist ein Umformwerkzeug 25 zum Umformen der erwärmten Mehrschichtverbundstruktur 10 im geöffneten Zustand dargestellt. Das Werkzeug 25 umfasst eine Matrize 26 und eine Patrize 27, die der dreidimensionalen Form desherzustellenden Bauteils entsprechend aneinander angepasst geformte Oberflächen bzw. Formflächen aufweisen, die einander in Pressrichtung zugewandt sind. Beim Zusammenfahren von Matrize 26 und Patrize 27 wird die dazwischen positionierte Mehrschichtverbundstruktur 10 den Formflächen von Matrize 26 und Patrize 27 entsprechend umgeformt.

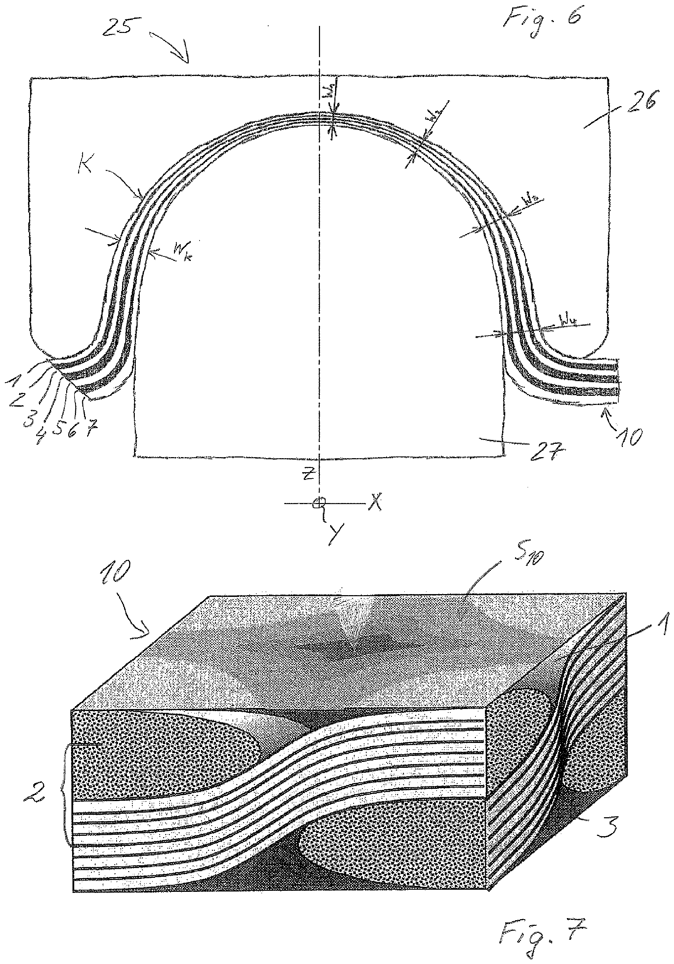

Figur 6 zeigt stark vereinfacht das Umformwerkzeug 25 im geschlossenen Zustand. Die in diesem Zustand bereits umgeformte Mehrschichtverbundstruktur 10 füllt die Kavität K des Werkzeugs 25. Die Matrize 26 und die Patrize 27 bilden im geschlossenen Zustand des Werkzeugs 25 die Werkzeugkavität K. Ein besonderes Merkmal des Umformwerkzeugs 25 ist, dass die Spaltweite Wₖ der Werkzeugkavität K am Ort xₖ, yₖ, zₖ eines werkzeugeigenen Koordinatensystems X, Y, Z in Abhängigkeit von der dreidimensionalen Geometrie der umgeformten Mehrschichtverbundstruktur 10 variiert. Die Variation ist so gestaltet, dass die lokale Spaltweite Wₖ der Werkzeugkavität K, also die zwischen Matrize 26 und Patrize 27 im geschlossenen Zustand verbleibende lokale Spaltweite Wₖ, der Materialstärke der umgeformten Mehrschichtverbundstruktur 10 entspricht. Dies läuft darauf hinaus, dass die Spaltweiten Wₖ in Flächenbereichen, in denen die Fasern durch die Drapierung stärker geschert werden, größer sind, als die Spaltweiten Wₖ in Flächenbereichen geringerer Scherung. In Figur 5 nimmt dementsprechend die Spaltweite von W₁ in Richtung auf W₄ zu. Durch die angepasste Variation der Kavität K bzw. der Spaltweite Wₖ der Kavität K wird dem Phänomen der sich lokal vergrößernden Faserdichte entgegengewirkt. Die Spaltweiten Wₖ sind so bemessen, dass die Faserdichte, die Fasermasse pro Volumeneinheit, in der umgeformten Mehrschichtstruktur 10 gleichmäßiger verteilt ist als sie es im Falle einer Kavität konstanter Spaltweite Wₖ wäre. Anders ausgedrückt sind die Spaltweiten Wₖ so bemessen, dass der vom Umformwerkzeug 25 auf die Mehrschichtverbundstruktur 10 ausgeübte Druck bei geschlossenem Umformwerkzeug 25 über zumindest die gesamte spätere Sichtfläche der Mehrschichtverbundstruktur 10 zumindest im Wesentlichen gleich ist.

Figur 7 zeigt in vergrößerter Darstellung einen kleinen Ausschnitt einer umgeformten Mehrschichtverbundstruktur 10, die als erste Faserschicht 2 ein Gewebe mit sich überkreuzenden Fasern aufweist. Dargestellt sind lediglich die erste Thermoplastschicht 1, die erste Faserschicht 2 und die zweite Thermoplastschicht 3. Die äußere Oberfläche S₁₀ ist in Grauabstufungen dargestellt. Thermoplastreiche Regionen sind hierbei dunkler als faserreiche Regionen dargestellt.

### Bezugszeichen:

- 1: Thermoplastschicht
- 2: Faserschicht
- 3: Thermoplastschicht
- 4: Faserschicht
- 5: Thermoplastschicht
- 6: Faserschicht
- 7: Thermoplastschicht
- 8: -
- 9: -
- 10: Mehrschichtverbundstruktur
- 11: Seitenwand vorne
- 12: Seitenwand hinten
- 13: Tür
- 14: Dach
- 15: Motorhaube
- 16: Heckklappe
- 17: Außenspiegel
- 18: Schweller
- 19: Stoßfänger
- 20: Spanneinrichtung
- 21: Spannrahmen
- 22: Spannglied
- 23: -
- 24: -
- 25: Umformwerkzeug
- 26: Matrize
- 27: Patrize

- K: Werkzeugkavität
- Sᵢ: äußere Oberfläche, Sichtfläche
- Wₖ: Spaltweite der Werkzeugkavität am Ort xₖ, yₖ, zₖ

## Patentansprüche

1. Mehrschichtverbundstruktur (10), die eine Sichtstruktur eines Fahrzeugs bildet oder als Sichtstruktur für ein Fahrzeug vorgesehen ist, und die durch Umformung um nichtparallele Achsen dreidimensional geformt ist, wobei die Mehrschichtverbundstruktur umfasst:
(a) eine äußere, erste durchsichtige Thermoplastschicht (1), eine zweite durchsichtige Thermoplastschicht (3) und eine dritte Thermoplastschicht (5) sowie optional eine oder mehrere weitere Thermoplastschichten (7),
(b) eine erste Faserschicht (2), die in der ersten Thermoplastschicht (1) oder in der zweiten Thermoplastschicht (3) oder zwischen der ersten Thermoplastschicht (1) und der zweiten Thermoplastschicht (3) eingebettet ist,
(c) und eine zweite Faserschicht (4), die in der zweiten Thermoplastschicht (3) oder der dritten Thermoplastschicht (5) oder zwischen der zweiten Thermoplastschicht (3) und der dritten Thermoplastschicht (5) eingebettet ist, sowie optional eine oder mehrere weitere Faserschichten (6),
(d) wobei die Mehrschichtverbundstruktur (10) in Faser-Sichtoptik ausgeführt ist,
(e) wenigstens die erste Thermoplastschicht (1), vorzugsweise auch wenigstens noch die zweite Thermoplastschicht (3), aus amorphem Kunststoff gebildet ist,
(f) die erste Faserschicht (2) ein Flächengebilde aus durchsichtigen Endlosfasern oder ein durchsichtiges Vlies
(g) und die zweite Faserschicht (4) ein Flächengebilde aus Endlosfasern oder ein Vlies ist, wobei
(h) die zweite und/oder weitere(n) Faserschichten (4, 6) oder die dritte und/oder weitere(n) Thermoplastschichten (5, 7) von außen durch die erste Thermoplastschicht (1), die erste Faserschicht (2) und die zweite Thermoplastschicht (3) erkennbar sind, und wobei
(i) die Sichtstruktur eine Außenhaut einer Seitenwand, eines Kotflügels, einer Motorhaube, einer Heckklappe, einer Tür, eines Dachs oder eines Spoilers des Fahrzeugs bildet.

2. Mehrschichtverbundstruktur nach Anspruch 1, **dadurch gekennzeichnet, dass** die dritte Thermoplastschicht (5) durchsichtig ist und gemeinsam mit der ersten Thermoplastschicht (1), der zweiten Thermoplastschicht (3) und der ersten Faserschicht (2) eine durchsichtige Thermoplastmasse bildet, durch die hindurch in einer Draufsicht auf die Mehrschichtverbundstruktur (10) eine in oder unter den mehreren durchsichtigen Thermoplastschichten (1, 3, 5) eingebettete zweiten oder weiteren Faserschicht (4; 6) oder eine unter den durchsichtigen Thermoplastschichten (1, 3, 5) gelegene weitere Thermoplastschicht (7) von außen erkennbar ist.

3. Mehrschichtverbundstruktur nach einem der vorhergehenden Ansprüche, **dadurch gekennzeichnet, dass** die erste Thermoplastschicht (1) frei von Fasern ist oder nur Fasern der ersten Faserschicht (2) enthält, und die zweite Thermoplastschicht (3) vorzugsweise auch frei von Fasern ist oder nur Fasern der zweiten Faserschicht (4) enthält.

4. Mehrschichtverbundstruktur nach einem der vorhergehenden Ansprüche, **dadurch gekennzeichnet, dass** die die zweite Faserschicht (4) durchsichtige Fasern umfasst, die klar oder farbig sind, vorzugsweise aus durchsichtigen Fasern besteht, wobei die durchsichtigen Fasern insbesondere Glasfasern oder Kunststofffasern sein können.

5. Mehrschichtverbundstruktur nach einem der vorhergehenden Ansprüche und wenigstens einem der folgenden Merkmale:
(i) wenigstens eine der zweiten und weiteren Faserschichten (4, 6) umfasst undurchsichtiges Fasermaterial;
(ii) wenigstens eine der zweiten und weiteren Faserschichten (4, 6) umfasst oder besteht aus Carbonfasern, Basaltfasern, Metallfasern, Kunststofffasern oder Naturfasern wie insbesondere Flachsfasern.

6. Mehrschichtverbundstruktur nach einem der vorhergehenden Ansprüche, **dadurch gekennzeichnet, dass** wenigstens eine der Thermoplastschichten (1, 3, 5, 7) zumindest im Wesentlichen aus einem Thermoplast besteht, der ein Polymer aus der Gruppe ist, die aus PC, PMMA, SAN und TPU besteht.

7. Mehrschichtverbundstruktur nach einem der vorhergehenden Ansprüche, **dadurch gekennzeichnet, dass** eine von der ersten Thermoplastschicht (1) gebildete äußere Oberfläche (Sᵢ) der Mehrschichtverbundstruktur (10) eine Rautiefe R_{z} von höchstens 5 µm, vorzugsweise höchstens 3 µm aufweist.

8. Mehrschichtverbundstruktur nach einem der vorhergehenden Ansprüche, **dadurch gekennzeichnet, dass** wenigstens die eine Innenfläche der Mehrschichtverbundstruktur (10) bildende Sichtstruktur der Mehrschichtverbundstruktur (10) durchsichtig ausgeführt ist.

9. Verfahren zur Herstellung einer Mehrschichtverbundstruktur nach einem der Ansprüche 1 bis 8 als Sichtstruktur für ein Fahrzeug, bei dem
(a) eine als Halbzeug vorliegende flächenhafte Mehrschichtverbundstruktur (10), die wenigstens drei Thermoplastschichten (1, 3, 5) und wenigstens zwei in oder zwischen den Thermoplastschichten (1, 3, 5) eingebettete Faserschichten (2, 4) aufweist, bis wenigstens auf die Schmelztemperatur jeder der Thermoplastschichten (1, 3, 5) erwärmt und
(b) im warmen Zustand zwischen einer Matrize (26) und einer Patrize (27) eines Umformwerkzeugs (25) dreidimensional bis in eine Endform werkzeugfallend umgeformt wird,
(c) wobei ein Halbzeug verwendet wird, in dem die wenigstens zwei Faserschichten (2, 4) jeweils ein Flächengebilde aus Endlosfasern oder ein Vlies sind.

10. Verfahren nach dem vorhergehenden Anspruch, bei dem die Matrize (26) und die Patrize (27) derart einander angepasst geformt sind, dass bei geschlossenem Umformwerkzeug (25) die lokalen Spaltweiten (Wₖ) der von der Matrize (26) und der Patrize (27) begrenzten Werkzeugkavität (K) der Materialstärke der umgeformten Mehrschichtverbundstruktur (10) entsprechen.

11. Verfahren nach einem der zwei vorhergehenden Ansprüche, bei dem die Mehrschichtverbundstruktur (10) außerhalb des Umformwerkzeugs (25) oder bei offenem Umformwerkzeug (25) zwischen Matrize (26) und Patrize (27) befindlich auf den warmen Zustand erwärmt und mittels einer Spanneinrichtung (20) unter Zugspannung gesetzt wird und dadurch beim Schließen des Umformwerkzeugs (10) faltenfrei zwischen Matrize (26) und Patrize (27) zu liegen kommt.

12. Verfahren nach dem vorhergehenden Anspruch, bei dem die Mehrschichtverbundstruktur (10) in einem Spannrahmen (21) der Spanneinrichtung (20) mittels Spanngliedern (22) gehalten und auf Zug gespannt wird.

13. Verfahren nach einem der zwei vorhergehenden Ansprüche, bei dem die Spanneinrichtung (20) einen Spannrahmen (21) und in Umfangsrichtung über den Spannrahmen (21) verteilt mehrere Spannglieder (22) umfasst, mittels denen die Mehrschichtverbundstruktur (10) am Rand an mehreren Stellen gehalten und auf Zug gespannt wird, und die Spannglieder (22) jeweils einen Halteteil zum Halten der Mehrschichtverbundstruktur (10) und einen Spannteil zur Erzeugung einer Spannkraft umfassen, wobei der Spannteil eine mechanische oder pneumatische Feder, vorzugsweise eine Rollfeder, oder ein elektromotorisch, pneumatisch oder hydraulisch auf Einhaltung einer Spannkraft nachführbarer Spannteil sein kann.

14. Verfahren nach einem der vorhergehenden Ansprüche, bei dem im Umformwerkzeug (25) wenigstens eine Anformstruktur oder Anformmasse, vorzugsweise aus Kunststoff, positioniert und beim Umformen der Mehrschichtverbundstruktur (10) gegen die Mehrschichtverbundstruktur (10), vorzugsweise gegen eine von der ersten Thermoplastschicht (1) abgewandte Rückseite der Mehrschichtverbundstruktur (10) gepresst und dadurch mit der Mehrschichtverbundstruktur (10) dauerhaft fest verbunden wird.

## Claims

1. A multi-layered composite structure (10) which forms a visible structure of a vehicle or is provided as a visible structure for a vehicle, and which is shaped three-dimensionally by being reshaped around non-parallel axes, wherein the multi-layered composite structure comprises:
(a) an outer, first transparent thermoplastic layer (1), a second transparent thermoplastic layer (3) and a third thermoplastic layer (5) and optionally also one or more subsequent thermoplastic layers (7);
(b) a first fibre layer (2) which is embedded in the first thermoplastic layer (1) or in the second thermoplastic layer (3) or between the first thermoplastic layer (1) and the second thermoplastic layer (3);
(c) and a second fibre layer (4) which is embedded in the second thermoplastic layer (3) or the third thermoplastic layer (5) or between the second thermoplastic layer (3) and the third thermoplastic layer (5), and optionally also one or more subsequent fibre layers (6);
(d) wherein: the multi-layered composite structure (10) is embodied with visible-fibre optics;
(e) at least the first thermoplastic layer (1) and preferably also at least the second thermoplastic layer (3) as well is formed from amorphous plastic;
(f) the first fibre layer (2) is a laminar fabric made of transparent continuous fibres or is a transparent fleece;
(g) and the second fibre layer (4) is a laminar fabric made of continuous fibres or is a fleece; wherein
(h) the second and/or subsequent fibre layer(s) (4, 6) or the third and/or subsequent thermoplastic layer(s) (5, 7) can be seen from the outside through the first thermoplastic layer (1), first fibre layer (2) and second thermoplastic layer (3), and wherein
(i) the visible structure forms an outer shell of a side wall, mudguard, bonnet, hatchback, door, roof or spoiler of the vehicle.

2. The multi-layered composite structure according to Claim 1, **characterised in that** the third thermoplastic layer (5) is transparent and, together with the first thermoplastic layer (1), second thermoplastic layer (3) and first fibre layer (2), forms a transparent thermoplastic compound through which a second or subsequent fibre layer (4; 6) embedded in or below the multiple transparent thermoplastic layers (1, 3, 5), or a subsequent thermoplastic layer (7) situated below the transparent thermoplastic layers (1, 3, 5), can be seen from the outside in a plan view onto the multi-layered composite structure (10).

3. The multi-layered composite structure according to any one of the preceding claims, **characterised in that** the first thermoplastic layer (1) contains no fibres or contains only fibres of the first fibre layer (2), and the second thermoplastic layer (3) preferably also contains no fibres or contains only fibres of the second fibre layer (4).

4. The multi-layered composite structure according to any one of the preceding claims, **characterised in that** the second fibre layer (4) comprises transparent fibres which are colourless or coloured, and preferably consists of transparent fibres, wherein the transparent fibres can in particular be glass fibres or plastic fibres.

5. The multi-layered composite structure according to any one of the preceding claims and at least one of the following features:
(i) at least one of the second and subsequent fibre layers (4, 6) comprises non-transparent fibre material;
(ii) at least one of the second and subsequent fibre layers (4, 6) comprises or consists of carbon fibres, basalt fibres, metal fibres, plastic fibres or natural fibres such as in particular flax fibres.

6. The multi-layered composite structure according to any one of the preceding claims, **characterised in that** at least one of the thermoplastic layers (1, 3, 5, 7) consists at least substantially of a thermoplastic which is a polymer from the group consisting of PC, PMMA, SAN and TPU.

7. The multi-layered composite structure according to any one of the preceding claims, **characterised in that** an outer surface (Sᵢ) of the multi-layered composite structure (10) which is formed by the first thermoplastic layer (1) exhibits a surface roughness R_{Z} of 5 µm at most, preferably 3 µm at most.

8. The multi-layered composite structure according to any one of the preceding claims, **characterised in that** at least the visible structure of the multi-layered composite structure (10) which forms an inner area of the multi-layered composite structure (10) is embodied so as to be transparent.

9. A method for manufacturing a multi-layered composite structure according to any one of Claims 1 to 8 as a visible structure for a vehicle, wherein
(a) a laminar multi-layered composite structure (10), which is provided as a semi-finished product and comprises at least three thermoplastic layers (1, 3, 5) and at least two fibre layers (2, 4) which are embedded in or between the thermoplastic layers (1, 3, 5), is heated to at least the melting temperature of each of the thermoplastic layers (1, 3, 5) and,
(b) once heated, three-dimensionally reshaped in a die into a final shape between a negative mould (26) and a positive mould (27) of a reshaping die (25),
(c) wherein a semi-finished product is used in which each of the at least two fibre layers (2, 4) is a laminar fabric made of continuous fibres or is a fleece.

10. The method according to the preceding claim, wherein the negative mould (26) and the positive mould (27) are shaped in a mutually conforming way, such that when the reshaping die is closed, the local gap widths (Wₖ) of the die cavity (K) which is defined by the negative mould (26) and the positive mould (27) corresponds to the material thickness of the reshaped multi-layered composite structure (10).

11. The method according to any one of the preceding two claims, wherein the multi-layered composite structure (10) is heated until hot while situated outside the reshaping die (25) or while situated between the negative mould (26) and positive mould (27) of an open reshaping die (25) and is placed under tensile stress by means of a tensing device (20) and thus comes to rest, with no creases, between the negative mould (26) and the positive mould (27) when the reshaping die (25) is closed.

12. The method according to the preceding claim, wherein the multi-layered composite structure (10) is held and tensed in a tensing frame (21) of the tensing device (20) by means of tensing members (22).

13. The method according to any one of the preceding two claims, wherein the tensing device (20) comprises a tensing frame (21) and, in a distribution over the tensing frame (21) in the circumferential direction, a plurality of tensing members (22) by means of which the multi-layered composite structure (10) is held and tensed at multiple points on its periphery, and the tensing members (22) each comprise a holding part for holding the multi-layered composite structure (10) and a tensing part for generating a tensing force, wherein the tensing part can be a mechanical or pneumatic spring, preferably a constant-force spring, or a tensing part which can be electromotorically, pneumatically or hydraulically made to follow a tensing force.

14. The method according to any one of the preceding claims, wherein at least one shaping structure or shaping compound, preferably made of plastic, is positioned in the reshaping die (25) and, when reshaping the multi-layered composite structure (10), is pressed against a rear side of the multi-layered composite structure (10) facing away from the first thermoplastic layer (1) and thus permanently and fixedly connected to the multi-layered composite structure (10).

## Revendications

1. Structure composite multicouche (10), qui forme une structure en couches d'un véhicule ou qui est conçue comme une structure en couches pour un véhicule, et qui est formée de manière tridimensionnelle par déformation autour d'axe non parallèles, la structure composite multicouche comprenant :
(a) une couche thermoplastique transparente externe (1), une deuxième couche thermoplastique transparente (3) et une troisième couche thermoplastique (5) ainsi que, en option, une ou plusieurs autres couches thermoplastiques (7),
(b) une première couche de fibres (2), qui est intégrée dans la première couche thermoplastique (1) ou dans la deuxième couche thermoplastique (3) ou entre la première couche thermoplastique (1) et la deuxième couche thermoplastique (3),
(c) et une deuxième couche de fibres (4), qui est intégrée dans la deuxième couche thermoplastique (3) ou dans la troisième couche thermoplastique (5) ou entre la deuxième couche thermoplastique (3) et la troisième couche thermoplastique (5), ainsi que, en option, une ou plusieurs autres couches de fibres (6),
(d) la structure composite multicouche (10) étant réalisée avec une optique à fibres,
(e) au moins la première couche thermoplastique (1) de préférence également au moins la deuxième couche thermoplastique (3) est constituée d'une matière plastique amorphe,
(f) la première couche de fibres (2) est une structure plane en fibres transparentes sans fin ou un non-tissé transparent,
(g) et la deuxième couche de fibres (4) est une structure plane en fibres sans fin ou un non-tissé,
(h) la deuxième et/ou les autres couches de fibres (4, 6) ou la troisième et/ou les autres couches thermoplastiques (5, 7) étant visibles de l'extérieur à travers la première couche thermoplastique (1), la première couche de fibres (2) et la deuxième couche thermoplastique (3) et
(i) la structure en couches constituant une enveloppe externe d'une paroi latérale, d'une aile, d'un capot de moteur, d'un hayon, d'une portière, d'un toit ou d'un spoiler du véhicule.

2. Structure composite multicouche selon la revendication 1, **caractérisée en ce que** la troisième couche thermoplastique (5) est transparente et forme, avec la première couche thermoplastique (1), la deuxième couche thermoplastique (3) et la première couche de fibres (2), une masse thermoplastique transparente, à travers laquelle, lorsque la structure composite multicouche (10) est vue de dessus, une deuxième ou autre couche de fibres (4 ; 6), intégrée dans ou sous les plusieurs couches thermoplastiques (1, 3, 5), ou une autre couche thermoplastique (7) posée sous les couches thermoplastiques transparentes (1, 3, 5), est visible de l'extérieur.

3. Structure composite multicouche selon l'une des revendications précédentes, **caractérisée en ce que** la première couche thermoplastique (1) est exempte de fibres ou ne contient que des fibres de la première couche de fibres (2) et la deuxième couche thermoplastique (3) est également, de préférence exempte de fibres ou ne contient que des fibres de la deuxième couche de fibres (4).

4. Structure composite multicouche selon l'une des revendications précédentes, **caractérisée en ce que** la deuxième couche de fibres (4) comprend des fibres transparentes qui sont incolores ou colorées, de préférence est constituée de fibres transparentes, les fibres transparentes pouvant être plus particulièrement des fibres de verre ou des fibres de matière plastique.

5. Structure composite multicouche selon l'une des revendications précédentes et au moins une des caractéristiques suivantes :
(i) au moins une des deuxième et autres couches de fibres (4, 6) comprend un matériau à fibres non transparente ;
(ii) au une des deuxième et autres couches de fibres (4, 6) comprend ou est constituée de fibres de carbone, de fibres de basalte, de fibres métalliques, de fibres de matière plastique ou de fibres naturelles comme, plus particulièrement des fibres de lin.

6. Structure composite multicouche selon l'une des revendications précédentes, **caractérisée en ce qu'**au moins une des couches thermoplastiques (1, 3, 5, 7) est constitué d'au moins globalement une matière plastique thermoplastique qui est un polymère du groupe constitué de PC, PMMA, SAN et TPU.

7. Structure composite multicouche selon l'une des revendications précédentes, **caractérisée en ce qu'**une surface externe (Sᵢ) de la structure composite multicouche (10), constituée de la première couche thermoplastique (1), présente une rugosité R_{z} de 5 µm maximum, de préférence de 3 µm maximum.

8. Structure composite multicouche selon l'une des revendications précédentes, **caractérisée en ce qu'**au moins la structure visible constituant la face interne de la structure composite multicouche (10) est réalisée de façon à être transparente.

9. Procédé de fabrication d'une structure composite multicouche selon l'une des revendications 1 à 8 en tant que structure visible pour un véhicule, dans lequel
(a) une structure composite multicouche (10) plane, existant sous forme d'ébauche, qui comprend au moins trois couches thermoplastiques (1, 3, 5) et au moins deux couches de fibres (2, 4) intégrées dans ou entre les couches thermoplastiques (1, 3, 5), est chauffée au moins jusqu'à la température de fusion de chacune des couches thermoplastiques (1, 3, 5) et
(b) dans l'état chaud, entre une matrice (26) et une patrice (27) d'un outil de formage (25), elle est formée de manière tridimensionnelle jusqu'à tomber de l'outil sous sa forme finale,
(c) une ébauche étant utilisée, dans laquelle au moins deux couches de fibres (2, 4) forment une structure plane en fibres sans fin ou un non-tissé.

10. Procédé selon la revendication précédente, dans lequel la matrice (26) et la patrice (27) présentent des formes complémentaires entre elles de façon à ce que, lorsque l'outil de formage (25) est fermé, les largeurs locales des interstices (Wk) de la cavité d'outil (K) définie par la matrice (26) et la patrice (27) correspondent à l'épaisseur de matériau de la structure composite multicouche (10).

11. Procédé selon l'une des deux revendications précédentes, dans lequel la structure composite multicouche (10) est chauffée à l'extérieur de l'outil de formage (25) ou lorsque l'outil de formage (25) est ouvert, entre la matrice (26) et la patrice (27), jusqu'à l'état chaud et est soumis à une traction au moyen d'un dispositif de tension (20) et lors de la fermeture de l'outil de formage vient en appui sans pli entre la matrice (26) et la patrice (27).

12. Procédé selon la revendication précédente, dans lequel la structure composite multicouche (10) est maintenue dans un cadre de tension (21) du dispositif de tension (20) au moyen d'éléments de tension (22) et est soumise à une traction.

13. Procédé selon l'une des deux revendications précédentes, dans lequel le dispositif de tension (20) comprend un cadre de tension (21) et plusieurs éléments de tension (22) répartis sur la circonférence du cadre de tension (21), au moyen desquels la structure composite multicouche (10) est tendue sur le bord à plusieurs endroits et est soumise à une traction, et les éléments de tension (22) comprennent chacun une partie de maintien pour le maintien de la structure composite multicouche (10) et une partie de tension pour la production d'une force de tension, la partie de tension pouvant être un ressort mécanique ou pneumatique, de préférence un ressort à crosse, ou une partie de tension asservie électriquement, pneumatiquement ou hydrauliquement pour le maintien d'une force de tension.

14. Procédé selon l'une des revendications précédentes, dans lequel, dans l'outil de formage (25), au moins une structure de formage ou une masse de formage, de préférence en matière plastique, est positionnée et, lors du formage de la structure composite multicouche (10), est pressée contre la structure composite multicouche (10), de préférence contre un côté arrière de la structure composite multicouche (10) opposée à la première couche thermoplastique (1) et ainsi reliée fermement et durablement avec la structure composite multicouche (10).
